# EUROPÄISCHE PATENTSCHRIFT

(11) **EP 2 632 973 B1**
(45) Veröffentlichungstag und Bekanntmachung des Hinweises auf die Patenterteilung: **07.11.2018**
(21) Anmeldenummer: 11761001.4
(22) Anmeldetag: 01.09.2011
(51) Int. Cl.: C08J 5/24, B32B 5/26, B32B 27/36, H02K 3/30

(54) **ISOLATIONSMATERIALVORPRODUKT UND ISOLATIONSMATERIAL**
INSULATING MATERIAL PRECURSOR AND INSULATING MATERIAL
PRECURSEUR DE MATERIAU ISOLANT ET MATERIAU ISOLANT

(30) Priorität: 29.10.2010 DE 202010014889 U
(43) Veröffentlichungstag der Anmeldung: 04.09.2013
(73) Patentinhaber: ABB AG, 68309 Mannheim (DE)
(72) Erfinder: NELGES, Jörg, 74821 Mosbach (DE); BOHNENBERGER, Jörg, 70173 Stuttgart (DE)
(86) Internationale Anmeldenummer: PCT/EP2011/004414
(87) Internationale Veröffentlichungsnummer: WO 2012/055456

(56) Entgegenhaltungen:
- EP-A1- 1 383 226
- EP-A1- 1 727 160
- EP-A2- 0 604 804
- WO-A1-2008/036151
- US-A1- 2003 035 960

## Beschreibung

Die Erfindung betrifft ein Isolationsmaterialvorprodukt, umfassend ein flächiges Kernschichtlaminat mit wenigstens folgenden miteinander verbundenen Schichten: Polyestervlies, Polyesterfolie, Polyestervlies, wobei die beiden Außenseiten des Kernschichtlaminates mit einer Schicht Harz versehen sind. Die Erfindung betrifft auch ein Isolationsmaterial, welches aus einem erfindungsgemäßen Isolationsmaterialvorprodukt hergestellt wurde.

Es ist allgemein bekannt, dass bei der elektrischen Isolation von elektrischen Leitern flächige Isolationsmaterialien, beispielsweise mit einer Dicke von 0,1mm bis 2mm, Anwendung finden. Diese werden auf Rollen geeigneter Breite, beispielsweise wenige Zentimeter oder auch einem halben Meter, bereitgestellt. Ein solcher Leiter kann beispielsweise ein Wicklungsabschnitt einer Statorwicklung eines Motors oder auch eines Generators sein, oder auch ein Röbelstab eines Generators besonders hoher Leistung, zum Beispiel einige 100MVA, sein. Aber auch die Statorwicklung eines kleineren Motors mit wenigen kVA Leistung oder darunter kann auf diese Weise elektrisch isoliert werden. Hierbei ist die Statorwicklung zumeist in radial innen angeordneten Nuten des jeweiligen hohlzylindrischen Stators angeordnet, welcher zumeist aus axial nebeneinander liegenden entsprechend geformten Blechlagen aufgebaut ist. Daher ist es sowohl möglich, das flächige Isolationsmaterial zuerst in die gewünschten Statornuten einzulegen und anschließend den zu isolierenden Leiterabschnitt einzulegen als auch zunächst den jeweiligen Leiterabschnitt zu umwickeln und dann in die Statornuten einzulegen.

Nachteilig an bisherigen Isolationsmaterialien ist jedoch, dass diese eine verhältnismäßig schlechte Wärmeleitfähigkeit aufweisen. Dies hat zur Folge, dass eine in der Statorwicklung entstehende Verlustwärme nicht hinreichend an den Stator abgeführt werden kann, sich die Statorwicklung im Betrieb entsprechend erwärmt und einen gegenüber einer niedrigen Leitertemperatur erhöhten elektrischen Widerstand aufweist. Daher ist der Querschnitt des Leiters einer Statorwicklung entsprechend konstruktiv zu erhöhen, was wieder einen erhöhten Materialeinsatz, beispielsweise an Kupfer, erforderlich macht.

*In der* WO2008/036151 A1 *ist ein Isolationsband offenbart, welches zwischen zwei Trägerschichten eine elektrische Isolationsschicht mit Mica-Partikeln mit einer verbesserten thermischen Leitfähigkeit aufweist. Auch die* EP 1383226 A1 *und die* EP 1727160 A1 *offenbaren eine Verbesserungsmöglichkeit für zur Erhöhung der thermischen Leitfähigkeit einer Mica-Partikel-basierten elektrischen Isolationsschicht. Die* US 2003035960 A1 *offenbart eine Mica-Partikel basierte Isolationsschicht mit verbesserter thermischer Leitfähigkeit.*

Ausgehend von diesem Stand der Technik ist es Aufgabe der Erfindung, ein flächiges Isolationsmaterialvorprodukt beziehungsweise ein Isolationsmaterial bereitzustellen, welches eine besonders hohe Wärmeleitfähigkeit aufweist.

Diese Aufgabe wird gelöst durch ein Isolationsmaterialvorprodukt gemäß Anspruch 1 und ein Isolationsmaterial gemäß Anspruch 7 der eingangs genannten Art. Das Isolationsmaterialvorprodukt ist dadurch gekennzeichnet, dass das Harz im B-Zustand ist und einen Gewichtsanteil von wenigstens 5% Bornitrid aufweist.

Bornitrid ist ein elektrisch isolierendes, kristallines Material mit einer hohen Wärmeleitfähigkeit und Härte, wobei erfindungsgemäß geeignete Partikel zumeist scheibenähnlich mit einem Durchmesser ab ca. 1µm oder auch bis 30µm und darüber vorliegen. Bei kleineren Durchmessern sind die Partikel jedoch eher kugelähnlich ausgeprägt. Diese lassen sich in besonders vorteilhafter Weise in ein flüssiges Harz einmischen, welches dann auf das Kernschichtlaminat aufzutragen ist. Ein typischer geeigneter Partikeldurchmesser kann beispielsweise 1µm bis 5µm betragen. Je nach gewünschter Schichtdicke der aufzutragenden Harzschicht können durchaus auch Partikeldurchmesser des Bornitrids von 10µm oder höher sinnvoll sein, der Partikeldurchmesser sollte die avisierte Schichtdicke jedoch nicht signifikant übersteigen, beispielsweise mit einem Faktor größer als zwei oder drei.

B-Zustand eines Harzes bedeutet, dass der Aushärtungsprozess des Harzes bereits begonnen aber anschließend gewollt unterbrochen wurde, so dass sich das Harz im Zustand der unvollständigen Polymerisierung befindet. B-Zustand eines Harzes kann aber auch bedeuten, dass dieses durch entsprechende Erwärmung auf eine Aufschmelztemperatur von beispielsweise 80°C und anschließendes Abkühlen in einen festen Zustand übergegangen ist, ohne dass die eigentliche chemische Reaktion der Polymerisation bereits initiiert wurde. In einem solchen Zustand lässt sich das Harz bei einer entsprechenden Temperatur wieder aufschmelzen, wobei die eigentliche

Polymerisation bei einer Temperatur oberhalb der Aufschmelztemperatur stattfindet, beispielsweise bei einer Backtemperatur im Bereich von 120°C bis 140°C.

Das Harz wird beim Beschichten im flüssigen A-Zustand beispielsweise mittels einer Walze mit entsprechender Oberflächenstruktur auf die Außenseiten des Kernschichtlaminates aufgetragen, wobei dieses dann in einem anschließenden Trocknungsprozess beispielsweise durch einen Ofen geführt wird, der eine so hohe Temperatur aufweist, dass das Harz dann zwar in den B-Zustand übergeht, aber eine Polymerisation im Wesentlichen vermieden ist. Das Harz ist zusammen mit den in ihm befindlichen Bornitridpartikeln bereits zumindest teilweise in die Polyestervliesschichten eingedrungen, so dass sich insbesondere auch diesbezüglich eine verbesserte Wärmeleitfähigkeit ergibt.

Erfindungsgemäß ist das Harz des Isolationsmaterialvorprodukts im B-Zustand. Daher ist dieses mechanisch noch flexibler und kann in besonders einfacher Weise um einen elektrisch zu isolierenden Leiter beziehungsweise in eine Statornut eines Motors oder Generators eingebracht werden, wenn dieser gefertigt wird. In diesem Zustand ist die volle elektrische Isolationsfähigkeit jedoch noch nicht erreicht. Es sei an dieser Stelle ausdrücklich erwähnt, dass das Isolationsmaterialvorprodukt, wie es im Rahmen dieser Erfindung verstanden wird, selbstverständlich alleine schon durch die Polyesterfolie elektrische Isolationseigenschaften aufweist, jedoch wird es tatsächlich erst dann als Isolationsmaterial eingesetzt und betriebsmäßig mit einer Spannung beansprucht, wenn die Harzschicht verbacken ist. Hierzu ist das Isolationsmaterialvorprodukt zusammen mit beispielsweise dem Stator und der oder den betreffenden Statorwicklungen auf eine Backtemperatur von beispielsweise 120 °C bis 140°C zu erhitzen, so dass sich das mit Bornitrid versetzte Harz wieder verflüssigt, sich demgemäß in seiner Form an die Gegebenheiten in beispielsweise der Statornut anpasst und auch noch weiter zusammen mit den Bornitridpartikeln in das Polyestervlies eindringt, dann polymerisiert und dabei erhärtet. Das so gebildete Isolationsmaterial weist in vorteilhafter Weise eine gesteigerte thermische Wärmeleitfähigkeit auf, insbesondere bezüglich der verbundenen Polyestervlies- / Harzschichten.

Gemäß einer besonders bevorzugten Ausgestaltung der Erfindung liegt der Gewichtsanteil des Bornitrids im Harz in einem Bereich von 10% bis 20%. Hier ist einerseits der Effekt der verbesserten Wärmeleitfähigkeit sehr stark ausgeprägt, beispielsweise in einem Faktor von 3 bis 5 gegenüber einer Harzschicht ohne Bornitridzusatz, wobei auf der anderen Seite die Polymerisation des Harzes durch die Bornitridpartikel vorzugsweise geringeren Durchmessers nicht nachhaltig beeinträchtigt ist.

In besonders bevorzugter Weise weist auch das Material der Polyesterfolie des Kernschichtlaminates einen Zusatz mit einem Gewichtsanteil von wenigstens 1% Bornitrid auf, beispielsweise auch 2% bis 5%. Dieser ist jedoch geringer als der Bornitridzusatz beim Harz, weil eine Beeinträchtigung der mechanischen Festigkeit der Folie durch die scheibenähnlichen Bornitridpartikel zu vermeiden ist. Bedarfsweise können dem Folienmaterial auch Bornitridpartikel zugesetzt werden, welche einen noch etwas geringeren Durchmesser als die Bornitridpartikel des Harzes aufweisen, um so einen erhöhten Anteil an Bornitrid für eine verbesserte Wärmeleitfähigkeit bei möglichst geringer Beeinträchtigung der Folienfestigkeit zu erreichen.

Entsprechend einer weiteren Ausgestaltungsform des erfindungsgemäßen Isolationsmaterialvorprodukts sind die Schichten des Kernschichtlaminates mittels eines Klebstoffs verbunden, welcher einen Gewichtsanteil von wenigstens 1% Bornitrid aufweist, beispielsweise auch 2% bis 5% und sogar auch bis zu 20% Die Verwendung eines Klebstoffes ist zur Herstellung einer mechanischen Verbindung zwischen den Schichten des Laminates unvermeidbar, wobei die Klebstoffschicht ebenfalls eine Beeinträchtigung der Wärmeleitfähigkeit des Laminats begründet. Die technische Wirkung des Bornitrids entspricht der zuvor genannten, wobei noch einmal explizit darauf hingewiesen sei, dass der Klebstoff beim Laminieren auch zusammen mit den Bornitridpartikeln zumindest teilweise in das Polyestervlies eindringt und dessen Wärmeleitfähigkeit auch von dessen Innenseite in vorteilhafter Weise erhöht.

Gemäß einer bevorzugten Ausgestaltungsform des erfindungsgemäßen Isolationsmaterialvorprodukts weist die Polyesterfolie eine Dicke im Bereich von 25µm bis 350µm auf, in besonders bevorzugter Weise 100µm. Die Polyestervliese weisen entsprechend einer weiteren Ausführungsvariante eine Dicke im Bereich von 25µm bis 130µm auf, besonders bevorzugt 50µm. Dies stellen fertigungstechnisch jeweils gut beherrschbare Schichtdicken dar, welche zudem im Verbund eine hinreichend hohe Isolationsfestigkeit gewährleisten, beispielsweise im Bereich von 3kV bis 35kV.

Die Dicke der aufgetragenen Harzschichten weist bevorzugter Weise jeweils eine Dicke im Bereich von 8µm bis 50µm auf, wobei das Harz beim Auftrag noch im flüssigen A-Zustand ist und bereits die Polyestervliese zumindest teilweise durchdringt. Die Dicke der Harzschicht richtet sich einerseits danach, wie sehr dieses in das Polyestervlies eindringen soll beziehungsweise kann und andererseits, wie viel Harz noch an den Oberflächen als reine Harzschicht vorhanden sein soll. Beispielsweise bei einer Nut in einem Blechpaket eines Stators, in welche ein Isolationsmaterialvorprodukt eingebracht wird, kann eine Harzschichtdicke im oberen Schichtdickenbereich durchaus vorteilhaft sein, weil das Harz dann bei seiner Verflüssigung bei einer Backtemperatur von 120° bis 140° dann beispielsweise auch in die durch benachbarte Blechlagen gebildete Spalte des Blechpaketes eindringen kann.

In bevorzugter Weise ist das Harz des Isolationsmaterialvorprodukts ein Epoxydharz und in besonders bevorzugter Weise das Epoxidharz LG9968 des Herstellers Hexion. Dieses hat sich bezüglich seiner thermischen und mechanischen Eigenschaften in Verbindung mit einem Bornitridzusatz als besonders geeignet herausgestellt. Als ebenso besonders geeignet hat sich das Bornitrid des Herstellers Momentive erwiesen.

Das erfindungsgemäße Problem wird auch gelöst durch ein Isolationsmaterial, welches durch temporäre Erhitzung eines erfindungsgemäßen Isolationsmaterialvorprodukts auf eine Backtemperatur von beispielsweise 120°C bis 140°C entstanden ist, wie bereits zuvor beschrieben.

Die Vorteile eines erfindungsgemäßen Isolationsmaterials erschließen sich in besonders günstiger Weise bei einem Elektromotor oder Generator mit einem sich längs einer Linie erstreckenden hohlzylindrischem Stator, welcher an seiner radialen Innenwandung mehrere überwiegend parallel zur Linie angeordnete Statorschlitze aufweist, in welchen Abschnitte eines Leiters einer elektrischen Statorwicklung des Elektromotors angeordnet sind, wobei der Leiter zumindest abschnittsweise von einem erfindungsgemäßen Isolationsmaterial umhüllt ist. Hier wirkt sich die verbesserte Wärmeableitung aus der Statorwicklung in den Stator derart aus, dass der Querschnitt der Statorwicklung verringert werden kann.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:

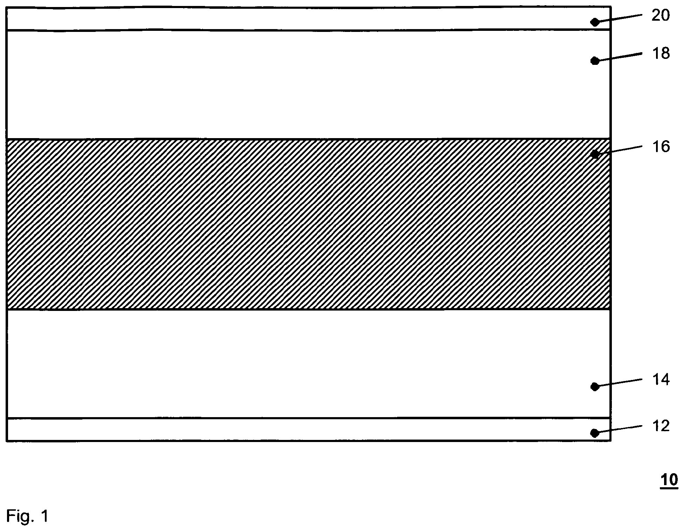

- Fig. 1: einen exemplarischen Schichtaufbau eines Isolationsmaterialvorprodukts

Fig. 1 zeigt einen exemplarischen Schichtaufbau eines Isolationsmaterialvorprodukts 10 mit einer erfindungsgemäßen Abfolge der Einzelschichten mit den jeweiligen Bezugszeichen:

| | |
|---|---|
| 12: | 15µm eines Harzes im B-Zustand, beispielsweise Hexion Epenol 9968-LG |
| 14: | 50µm Polyestervlies, |
| 16: | 100µm Polyesterfolie mit einem Materialzusatz von ca. 10% Bornitrid, |
| 18: | 50µm Polyestervlies, |
| 20: | 15µm eines Harzes im B-Zustand, beispielsweise Hexion Epenol 9968-LG |

Nach einem jeweiligen Erhitzungsvorgang auf beispielsweise 140°C sind die Harzschichten 12, 20 dann zumindest teilweise in die Hohlräume der angrenzenden Polyestervliese 14, 18 eingesaugt und bilden mit diesen einen festen Isolationsstoff, wobei das Harz dann vollständig polymerisiert ist. Das Kernschichtlaminat weist zwischen der Polyesterfolie 16 und den beidseitig angrenzenden Polyestervliesen 14, 18 eine jeweilige Schicht eines Klebstoffes auf, welcher zu einem Teil, beispielsweise 5%-10% Gewichtsanteil, mit Bornitrid versetzt ist. Dies ist eine Menge, welche die Klebewirkung noch nicht nachhaltig reduziert. Hierbei ist jedoch zu beachten, dass eine eher geringe Partikelgröße des Bornitrids von beispielsweise 1µm bis 5µm zu wählen ist, weil gerade die größeren Partikel von beispielsweise 10µm Durchmesser und höher die Klebewirkung überproportional reduzieren können.

### Bezugszeichenliste

- 10: exemplarischer Schichtaufbau eines Isolationsmaterialvorprodukts
- 12: erste Einzelschicht Harz im B-Zustand
- 14: erste Einzelschicht Polyestervlies
- 16: Polyesterfolienschicht
- 18: zweite Einzelschicht Polyestervlies
- 20: zweite Einzelschicht Harz im B-Zustand

## Patentansprüche

1. Isolationsmaterialvorprodukt (10), umfassend ein flächiges Kernschichtlaminat mit wenigstens folgenden miteinander verbundenen Schichten
- Polyestervlies (14),
- Polyesterfolie (16),
- Polyestervlies (18),
wobei,
• die beiden Außenseiten des Kernschichtlaminates mit einer Schicht (12, 20) Harz versehen sind,
• das Harz im B-Zustand ist und einen Gewichtsanteil von wenigstens 5% Bornitrid aufweist,
• die Polyesterfolie (16) eine Dicke im Bereich von 25µm bis 350µm aufweist und
• die Polyestervliese (14, 18) eine Dicke im Bereich von 25µm bis 130µm aufweisen.

2. Isolationsmaterialvorprodukt nach Anspruch 1, **dadurch gekennzeichnet, dass** der Gewichtsanteil des Bornitrids im Harz in einem Bereich von 10% bis 20% liegt.

3. Isolationsmaterialvorprodukt nach einem der Ansprüche 1 oder 2, **dadurch gekennzeichnet, dass** das Material der Polyesterfolie (16) des Kernschichtlaminates einen Zusatz mit einem Gewichtsanteil von wenigstens 1% Bornitrid aufweist.

4. Isolationsmaterialvorprodukt nach einem der vorangegangenen Ansprüchen, **dadurch gekennzeichnet, dass** die Schichten (14, 16, 18) des Kernschichtlaminates mit einem Klebstoff verbunden sind, welcher einen Gewichtsanteil von wenigstens 1% Bornitrid aufweist.

5. Isolationsmaterialvorprodukt nach einem der vorangegangenen Ansprüchen, **dadurch gekennzeichnet, dass** die Harzschichten (12, 20) jeweils eine Dicke im Bereich von 8µm bis 50µm aufweisen.

6. Isolationsmaterialvorprodukt nach einem der vorangegangenen Ansprüchen, **dadurch gekennzeichnet, dass** das Harz ein Epoxydharz ist.

7. Isolationsmaterial, **dadurch gekennzeichnet, dass** dieses durch temporäre Erhitzung eines Isolationsmaterialvorprodukts nach einem der Ansprüche 1 bis 6 auf eine Backtemperatur entstanden ist.

8. Elektromotor mit einem sich längs einer Linie erstreckenden hohlzylindrischem Stator, welcher an seiner radialen Innenwandung mehrere überwiegend parallel zur Linie angeordnete Statorschlitze aufweist, in welchen Abschnitte eines Leiters einer elektrischen Statorwicklung des Elektromotors angeordnet sind,
**dadurch gekennzeichnet,**
**dass** der Leiter zumindest abschnittsweise von einem Isolationsmaterial nach Anspruch 7 umhüllt ist.

## Claims

1. Insulation material precursor (10) comprising a sheetlike core layer laminate with at least the following interconnected layers:
- polyester nonwoven (14),
- polyester film (16),
- polyester nonwoven (18),
wherein
• the two outer sides of the core layer laminate are provided with a layer (12, 20) of resin,
• the resin is at the B-stage and has a weight fraction of at least 5% of boron nitride,
• the polyester film (16) has a thickness in the range from 25 µm to 350 µm, and
• the polyester nonwovens (14, 18) have a thickness in the range from 25 µm to 130 µm.

2. Insulation material precursor according to Claim 1, **characterized in that** the weight fraction of the boron nitride in the resin is in a range from 10% to 20%.

3. Insulation material precursor according to either of Claims 1 and 2, **characterized in that** the material of the polyester film (16) of the core layer laminate features an addition with a weight fraction of at least 1% of boron nitride.

4. Insulation material precursor according to any of the preceding claims, **characterized in that** the layers (14, 16, 18) of the core layer laminate are joined with an adhesive which has a weight fraction of at least 1% of boron nitride.

5. Insulation material precursor according to any of the preceding claims, **characterized in that** the resin layers (12, 20) each have a thickness in the range from 8 µm to 50 µm.

6. Insulation material precursor according to any of the preceding claims, **characterized in that** the resin is an epoxy resin.

7. Insulation material **characterized in that** it has been formed by temporarily heating an insulation material precursor according to any of Claims 1 to 6 to a baking temperature.

8. Electric motor having a hollow-cylindrical stator which extends along a line and which on its radial inner wall has a plurality of stator slots which are arranged predominantly parallel to the line and in which sections of a conductor of an electrical stator winding of the electric motor are arranged, **characterized in that** the conductor is enveloped at least in sections by an insulation material according to Claim 7.

## Revendications

1. Produit semi-fini pour matériau d'isolation (10), comprenant un stratifié plat à couche d'âme comportant au moins les couches suivantes liées entre elles
- non-tissé en polyester (14),
- film de polyester (16),
- non-tissé en polyester (18),
dans lequel,
• les deux faces externes du stratifié à couche d'âme sont munies d'une couche (12, 20) de résine,
• la résine est à l'état B et présente une proportion pondérale d'au moins 5 % de nitrure de bore,
• le film de polyester (16) présente une épaisseur dans la plage de 25 µm à 350 µm et
• les non-tissés en polyester (14, 18) présentent une épaisseur dans la plage de 25 µm à 130 µm.

2. Produit semi-fini pour matériau d'isolation selon la revendication 1, **caractérisé en ce que** la proportion pondérale du nitrure de bore dans la résine se situe dans une plage de 10 % à 20 %.

3. Produit semi-fini pour matériau d'isolation selon l'une quelconque des revendications 1 et 2, **caractérisé en ce que** le matériau du film de polyester (16) du stratifié à couche d'âme comporte un additif ayant une proportion pondérale d'au moins 1 % de nitrure de bore.

4. Produit semi-fini pour matériau d'isolation selon l'une quelconque des revendications précédentes, **caractérisé en ce que** les couches (14, 16, 18) du stratifié à couche d'âme sont liées avec un adhésif qui comporte une proportion pondérale d'au moins 1 % de nitrure de bore.

5. Produit semi-fini pour matériau d'isolation selon l'une quelconque des revendications précédentes, **caractérisé en ce que** les couches de résine (12, 20) présentent chacune une épaisseur dans la plage de 8 µm à 50 µm.

6. Produit semi-fini pour matériau d'isolation selon l'une quelconque des revendications précédentes, **caractérisé en ce que** la résine est une résine époxy.

7. Matériau d'isolation, **caractérisé en ce qu'**il est obtenu par chauffage temporaire d'un produit semi-fini pour matériau d'isolation selon l'une quelconque des revendications 1 à 6 jusqu'à une température de collage.

8. Moteur électrique comportant un stator en forme de cylindre creux s'étendant le long d'une ligne, qui comporte sur sa paroi interne radiale plusieurs fentes de stator disposées essentiellement parallèlement à la ligne, dans lesquelles sont placés des segments d'un conducteur d'un enroulement électrique de stator du moteur électrique,
**caractérisé en ce que**
le conducteur est entouré au moins par segments d'un matériau d'isolation selon la revendication 7.
